# EUROPEAN PATENT APPLICATION

(11) **EP 4 659 950 A1**
(43) Date of publication of application: **10.12.2025**
(21) Application number: 24179479.1
(22) Date of filing: 03.06.2024
(51) Int. Cl.: B32B 5/02, B32B 21/10, B32B 29/02, A61L 9/00, B32B 38/08, E04F 13/00

(54) **METHOD OF MANUFACTURING A LAMINATE**

(71) Applicant: Depco-Trh Pty Ltd, Williamstown Victoria 3016 (AU)
(72) Inventor: Price, David, Williamstown, 3016 (AU); Giansiracusa, Joseph, Ascot Vale, 3032 (AU)
(74) Representative: Seyer & Nobbe Patentanwälte PartmbB

(57) **Abstract**

Method of manufacturing a laminate comprising the steps of
a) providing one or more resin-containing substrates
b) providing a glass fleece
c) hot pressing of the one or more resin-containing substrates with the glass fleece
d) coating the glass fleece with one or more layers of a silicate binder.

## Description

The present invention relates to a method of manufacturing a laminate and a laminate.

Laminated materials are used in many applications where clean surfaces are in high demand. The pandemic involving Covid 19 (SARS CoV 2) has not only emphasised the need for clean surfaces, but also clean air in interior spaces. Products that address occupational health issues, environmental impact awareness, and contribute to a clean indoor environment are keenly sought after in the world market. The meaning of a clean environment relates to both the surface of the laminate and the surrounding air, and the environmental impact of the laminate measured in part by safe use in industrial fabrication, and in part by the ability to recover and recycle the laminate rather than having to replace the laminate after one commercial use. Laminates that can be used multiple times is not the typical business model of the manufacturers of a range of traditional laminates where capacity optimisation is better served by single use of the original laminate.

In the field of traditional laminates there are well known examples, such as low pressure laminates (LPL) also known as low pressure melamine (LPM), continuous pressure laminates (CPL), high pressure laminates (HPL) and compact laminates, all of which feature a closed surface based on a continuous layer of thermosetting melamine formaldehyde (MF) sufficiently thick to meet criteria such as heat resistance, moisture resistance, stain resistance and chemical resistance. These types of decorative laminates are manufactured in a hot press where the thermosetting resin changes from b-stage cure (ca. 5 - 8 weight-% volatiles) to a fully cured surface using temperatures usually in the range of 150 °C to 210 °C and pressure between 250 N/cm² to 1000 N/cm². Experts in the field establish the pressing conditions best suited to the manufacture of this variety of laminates, and in the vast majority of cases the decorative surface is a transparent melamine formaldehyde (MF) and a décor paper used as carrier of the resin as well as to provide the colour or printed design. The thermosetting resin is usually in excess of 50% by weight of the impregnated paper, for example 100g/m² paper 120g/m² resin on dry weight basis, and flows while under pressure and in contact with the hot pressplate to create a surface without any open areas to achieve the required moisture resistance, stain resistance, chemical resistance and wear resistance. Whether new, aged or damaged these laminates are not re-coated or refurbished with the same MF material perhaps due to the removal and replacement of the original surface deemed either or both impractical and uneconomical in comparison to replacement with a new material piece.

The traditional laminates (LPM, HPL, CPL, compact) are manufactured with organic materials such as saturating kraft paper, décor paper, clear overlay paper and synthetic thermosetting resins such as urea formaldehyde, melamine formaldehyde, phenol formaldehyde and various mixtures of these resins depending on the type of laminate. A smooth matte surface starting from about 4 µm texture depth, or a textured surface from about 30 µm up to and exceeding 250 µm texture depth is created using a press tool in a hot press where the thermoset resin flows and in contact with the press tool forms an opposite image of the press tool and the desired fully cured surface. The thermosetting resin, typically more than 50 weight-% of the impregnated décor paper provides the non-porous surface, and the press tool is chromeplated to help avoid sticking of the resin impregnated paper to the press tool in the pressing step.

Traditional thermosetting laminates with a melamine formaldehyde surface are prone to showing unwanted fingerprint marking due to the light refraction index of melamine formaldehyde surfaces, approximately 1.68 depending on the percentage of melamine. A typical high pressure laminate (HPL) can be manufactured with a clear surface coating to reduce the impact of fingerprint marking. In one example the composition of the anti-fingerprint coating is an organosilica sol, siloxane graft type polymer and a cold glass coating agent and the method of manufacture is that of a typical HPL laminate. The transfer film used in the manufacturing process is disposed of after the hot pressing step.

Traditional thermosetting laminates do not contain a photocatalyst embedded in the structure due to the activity of the photocatalyst damaging organic materials.

In the high-end kitchen market, engineered stone competes with a number of alternatives, for example porcelain, solid surfaces (Corian & Hi-Macs), compact laminate and HPL laminates for kitchen benchtops. Recently in Australia it was announced that engineered stone, in some cases containing 95 weight-% crystalline silica, would be banned effective 1^{st} July 2024. This means that there is an immediate demand for a replacement for engineered stone which can be achieved by having a surface that has the look and feel of stone, but without a high level of crystalline silica, notably in Australia legislated as less than 1 weight-% crystalline silica.

The task of the invention is to overcome the disadvantages known from the prior art. The objective of the invention includes providing a method for manufacturing a laminate that, at least partially, utilizes existing equipment and processes for laminate production, aiming for economic benefits such as lower capital investment. The new decorative laminate can significantly differ from traditional laminate surfaces. The goal is to produce a laminate that does not require a transparent melamine formaldehyde surface layer as the outermost layer, nor a mandatory high-quality or printed décor paper. Additionally, the laminate should preferably have a fingerprint and mold-resistant, vapor-permeable surface that is also refurbishable.

It would also be advantageous if the laminates could be used as a substitute for engineered stone in large-format wall paneling where a thinner, lighter material is specified, such as ceilings and door panels.

To solve the problem, a method of manufacturing a laminate is provided, comprising the steps of
a) providing one or more resin-containing substrates
b) providing a glass fleece
c) hot pressing of the one or more resin-containing substrates with the glass fleece
d) coating the glass fleece with one or more layers of a silicate binder.

Papers and engineered wood panels are preferably used as substrates. However, other substrates such as textiles, nonwovens or plastic, or metal materials can also be used. One or more substrates can be used, whereby the substrates can be the same or different.

The one or more substrates, in particular paper substrates, preferably have a resin impregnation. Preferably, the substrates are impregnated with the resin before use according to step a). This can be done by dip impregnation, in which the substrate is dipped in a resin. The coated substrate can then be squeegeed and/or physically dried. Preferably, synthetic resins are used as resins, particularly preferably resins from the group of aminoplast resins, in particular melamine-formaldehyde resins, urea-formaldehyde resins, phenol-formaldehyde, aqueous polymer dispersions or mixtures thereof.

The resin of the one or more resin-containing substrates is preferably a thermosetting resin curable by heat in a hot press.

The one or more resin-containing substrates are brought together with a glass fleece, preferably a non-woven glass fleece.

According to the invention, hot pressing is understood to mean the pressing of the one or more resin-containing substrates with the glass fleece at a temperature of preferably more than 120 °C and a surface pressure of preferably at least 15 bar.

The silicate binder is preferably a mineral binder comprising alkali silicates, for example sodium or potassium silicates. These binders are often used in the construction industry, in the manufacture of paints and coatings and in the ceramics and glass industries. Preferably, a silicate paint is used as silicate binder. A silicate binder is commonly used in the formulation of paints and coatings to bind pigments and fillers. Silicate binders can form a chemical bond with mineral substrates, resulting in an extremely durable and long-lasting coating. Silicate binders offer excellent resistance to weathering, UV radiation and environmental pollutants. Silicate binders are permeable to water vapor. The alkalinity of silicate binders provides natural resistance to mold growth.

The silicate binders are preferably highly alkaline, i.e. they have a high pH value (approx. 11-13), which is also important for the solidification of the binder.

Preferably, the laminate surface comprises of a glass fleece pressed as the outermost surface of the laminate when combining the components of the laminate in a hot press equipped with a press tool. The glass fleece acts as an intermediate layer between the silicate binder and the underlying layers of the laminate. Preferably, the press tool used to provide the initial topography of the laminate surface is a plate in a single or multi daylight press, or an endless band in a continuous press. The immediate creation of an initial surface topography occurs when the glass fleece and the at least one resin-containing substrates below the glass fleece preferably containing a flowable thermosetting resin are laminated under heat and pressure in the press equipped with a smooth, textured or structured press tool to form the laminate. It is also possible when forming a non-flat 3D shaped laminate with plastic or metallic materials combined with a substrate containing a thermosetting resin, e.g. a paper, and the glass fleece, that the hot platen of the press has a smooth, textured or structured surface thereby avoiding the use of a press tool.

The glass fleece may be coated before and/or after the pressing step with the silicate binder applied in one or more coating steps to the glass fleece. The non-film-forming silicate binder is resistant to mold and fingerprints, vapor permeable and, advantageously, resistant to bulk water. The silicate binder if applied as a barrier coating before the hot pressing step can be modified to provide some flexibility in the pressing step.

The laminate produced according to the invention preferably has no thermosetting melamine formaldehyde as the outermost surface. Instead, a glass fleece coated with a silicate binder is used to create a laminate with a mould and fingerprint resistant vapour permeable surface that may contain an embedded photocatalyst.

By embedding the photocatalyst in the surface it is safe from a consumer use perspective to use nano-materials such as nanoscale, such as 5-100 nm, TiO₂. Where the photocatalyst is embedded in the original silicate binder coating, it is still possible to apply at some later date a new coating of silicate paint while maintaining a degree of photocatalytic activity as, according to Fujishima et al (Journal of Photochemistry and Photobiology - Photochemistry Reviews 1 (2000) 1 - 21 page 9), photocatalytic degradation can take place at a distance of as much as 500 µm away from the TiO₂ surface.

Photocatalysts based on TiO₂ are widely used in commercial activities. The TiO₂ crystal can be doped with a wide range of elements, for example but not limited to aluminium, copper, silica, silver, magnesium, molybdenum, wolfram or carbon to effect the band gap and photocatalytic performance. A photocatalyst that can be activated by sunlight as well as a VIS light source (KRONOClean 7000 (Kronos Duisburg DE)) is a preferred choice of photocatalyst.

The outermost surface above the thermosetting resin bonding layer preferably comprises a sheet-like material of glass fleece, coated with a silicate binder material optionally containing a photocatalyst. The laminate can be formed in a hot press by combining the glass fleece with one or more resin impregnated papers where the glass fleece is the outermost layer and is coated before or after the hot pressing step with a silicate binder that may contain one or more functional inorganic additives. The silicate binder coating provides a mould and fingerprint resistant vapour permeable surface and, in combination with the fully cured thermosetting resin used to bond the glass fleece to the laminate, is easy to clean.

An objective in the manufacture of the new laminate is to minimise the amount of thermosetting resin flowing from one or more resin-containing substrates during the hot pressing step and bleeding through the open structure of the glass fleece and forming a significant part of the outermost surface. By avoiding bleed through and formation of a thick thermosetting resin layer sanding to expose the glass fleece can be unnecessary.

When it can be avoided that any thermosetting resin bleeds through the glass fleece, the use of pressing tools (pressplates / pressbelts) without a chrome layer is possible.

Avoiding bleed through of the thermosetting resin can be achieved by one or more process steps, for example it can be achieved by applying a thin inorganic material layer compatible with silicate binder to the outermost surface of the glass fleece before the hot pressing step, preferably using a low pressure application such as spraying to avoid forcing the coating too far into the glass fleece. The silicate binder can be modified with an inorganic filler to reduce the flow and improve the barrier property of a thin coating. For example, calcium carbonate can be used as a filler applied on the front side of a glass fleece and not substantially progressing through to the reverse side thereby leaving the reverse side of the glass fleece open to allow ingress of for example an amino or phenolic formaldehyde resin and securely bind two layers creating the outer layer of the laminate. Another option is to use an impregnation device that coats the upper side with a coating of a silicate binder and the reverse side of the glass fleece with a thermosetting resin. Another option is by using a glass fleece with sufficient thickness that the thermosetting resin does not reach the surface of the laminate during the hot pressing step.

While it may be possible to minimise flow of the thermosetting resin through the glass fleece during the pressing step by choosing a heavy weight glass fleece, and by controlling the amount of thermosetting resin, volatile content, degree of cure and type of catalyst in the B-stage resin impregnated paper, due to the fact that high pressure for deep textures may be required and can be achieved in a modern hot press, for example 300 - 700 N/cm² in a short cycle press and 700 N/cm² or higher in a high pressure press and forcing the b-staged thermosetting resin to flow in all directions and fill any voids in the structure being pressed, a silicate binder layer can be applied to one side (what will be the outermost side on the manufactured laminate) of the glass fleece layer before the hot pressing step. This provides a barrier between the flowable thermosetting resin and the outermost face of the laminate. In all cases a silicate binder coating can be applied to the glass fleece layer after the hot pressing step.

It is an objective to minimise the amount of thermosetting resin forming part of the outermost layer of the laminate, therefore the glass fleece is usually not impregnated with any thermosetting resin before forming the laminate in the hot press, however in an option the glass fleece is partially coated with a silicate binder on what is to be the outermost side in the pressed laminate, dried, and a coating of thermosetting resin such as melamine formaldehyde applied to the other side and dried to b-stage of about 5 weight-% to 10 weight-% volatile content. The order of the coating steps can be reversed, whereby the thermosetting resin is first applied to the underside of the glass fleece, the resin is dried to about 5 to 10 % by weight of volatile components and then the silicate binder is applied to the upper side of the glass fleece. The silicate binder, which is applied to the glass fleece after the thermosetting resin, can be dried by non-thermal means to prevent the resin from over-curing, for example with NIR radiation. The pre-treated glass fleece is then formed as the outermost layer of the laminate in a hot pressing process.

Furthermore, the amount of thermosetting resin in the layer below the glass fleece can be controlled. The chemistry of the resin can be adjusted to create low flow characteristics. In addition, the fact that unlike traditional laminates which use impregnated papers fully saturated with an excess of thermosetting resin outside the paper carrier structure, the heated pressplate is in the method according not in contact with a surface coating of thermosetting resin. Thus, there is preferably no large excess of thermosetting resin typical of traditional laminates which can limit the ability of the thermosetting resin to form a thick cohesive resin layer above the glass fleece.

Preferably, a decorative paper layer is dispensed with as a means of creating and displaying a decorative effect on the surface, be it color or print, which allows the use of less expensive resin-impregnated paper layers. This can be achieved by pigmentation of the silicate binder and printing on the silicate binder surface.

However if the use of décor paper or printed décor paper below the glass fleece is desirable the decorative effect of the décor paper can be realised by applying a clear or translucent silicate binder coating and allowing either the print design to remain visible, or the formation character of the glass fleece to be visible as a contrast, e.g using black paper and white glass fleece.

The inventive laminate surface may present a decorative aspect such as a unicolour through pigmentation of the silicate binder, or have a manually made abstract design, or as a printed motif. The printed design is preferably achieved by inkjet printing using printing inks based predominately on inorganic pigments, or creating a unique design by manual means, for example indigenous artists using traditional methods, or by application with a trowel to imitate a concrete finish.

In an advantageous embodiment of the invention, the one or more resin-containing substrates are one or more resin-impregnated papers and/or one or more partially cured resin coated substrates. Preferably, the one or more resin-containing substrates comprise one or more non resin-containing substrates as a bottom layer. Preferably, at least the layer that comes into contact with the glass fleece comprises resin.

Preferably, the glass fleece is only coated on the upper side with a silicate binder.

Preferably, the bottom side of the glass fleece is coated with a resin. More preferably, the bottom coating of the glass fleece is applied before the hot pressing step.

The coating of the upper side of the glass fleece with a silicate binder according to step d) can be carried out before and/or after the step of hot pressing according to step c).

The silicate binder preferably comprises potassium silicate and/or sol-silicate. Preferably, more than 50 %-weight of the silicate binder is of potassium silicate and/or sol-silicate. Preferably the silicate binder consists of potassium silicate and/or sol-silicate.

The silicate binder can comprise one or more inorganic additives, preferably selected from the group consisting of a photocatalyst, colour pigments, calcium carbonate, abrasion resistant hard particles, antiviral additives, antibacterial additives and antimicrobial additives.

Due to the alkaline nature of the silicate binder and the inclusion of a photocatalyst, the choice of additives to provide additional functionality to the laminate is preferably selected from inorganic functional additives such as an antiviral additive based on copper nano particles, or an antibacterial additive such as glass encapsulated silver ion. Pigments used to provide colour, printing or abstract design to the laminate are preferably also be of an inorganic nature.

Due to the fact that the glass fleece material and silicate binder are not flammable, additives such as fire retardants are preferably concentrated below the glass fleece layer. One or more resin-containing substrate layers used in the laminate may include fire retardant additives such as but not limited to aluminium hydroxide, melamine, cyanuric acid, magnesium hydroxide, magnesium sulphate, ammonium polyphosphate. The resin-containing or partially resin-containing substrates may be a fire retardant paper such as JagoTech Flame Retardant Paper RHB1 (JagoTech Paper, Almersbach DE).

To create a smooth surface it may be necessary for the silicate binder to be applied in several stages and to sand the surface after each application has dried. To minimise the number of silicate binder coatings the solids content of the silicate binder can be increased by the addition of an inorganic extender material such as calcium carbonate. The calcium carbonate provides a degree of opacity and due to the relative soft nature of calcium carbonate (Mohs hardness 3) enhances the ability to create smoothness of the surface layer, for example sanding of the laminate with one or more fine grit sandpapers to increase smoothness. The source of calcium carbonate used with silicate binder coating material is not limited, however it is preferred that the calcium carbonate is sourced as waste "marble dust" recovered from the mining and processing of marble deposits. Other sources of calcium carbonate may also be used including dolomite (CaMg (CO₃)₂), and when available in commercial quantities fine powders of biogenic CaCOs such as eggshells. A calcium carbonate with a low content of crystalline silica is preferred to achieve a final laminate with low crystalline silica content, ideally below 1 % weight basis.

The silicate binder is compatible with the inclusion of a photocatalyst and other functional inorganic additives. When there is a need to provide abrasion resistance, for example in a potentially high wear application or after printing on silicate binder surface, a clear or translucent silicate binder coating can be applied and may contain abrasion resistant particles, for example silane coated corundum or the like. The additives can influence the properties of the laminate, especially the surface. For example, antibacterial and antiviral additives can be used to obtain an antibacterial and antiviral surface.

Applying the hard particles, such as abrasion resistant particles, in the top coating after pressing step prevents the hard particles causing damage to the press tool in the pressing step. The coating of the glass fleece after the hot pressing step should be undertaken with care when it is desirable to maintain as closely as possible the initial topography created by the pressing tool.

Preferably, the photocatalyst is not introduced in the first layer of the silicate binder on the glass fleece. Thus, the first layer of silicate binder on the glass fleece does preferably not contain a photocatalyst. More preferably, any photocatalyst is positioned in the outermost coating of potassium silicate or sol-silicate to enhance the ability of the photocatalyst to destroy pollutants found in indoor environments. The non-film forming nature of the coating enables the airborne pollutants to permeate the surface layer and come into contact with the photocatalyst therefore when there are several coatings of the silicate binder it is preferable the photocatalyst is positioned in the outermost silicate binder coating layer which also reduces the risk that the photocatalyst is in direct contact with any organic component of the laminate. While damage by the photocatalyst to any underlying organic material layer is not expected to impact the visual or physical aspects of the glass fleece and silicate binder surface, the choice of a thicker glass fleece, for example exceeding 120g/m², and/or increasing the number of silicate binder coatings reduces the risk visible photocatalyst damage.

The weight (g/m²) of the glass fleece can influence the decision whether to partially coat the glass fleece with silicate binder before the laminate layers are consolidated in a hot press, primarily to minimise any thermosetting resin bleeding through and forming a thick layer as part of the outer surface. The glass fleece layer may be on one or both sides of the laminate. There is no limit to the hue or weight of the glass fleece, for example glass fleece is available with a white appearance or a black appearance, available from 20 g/m² to 120g/m², this range not being a limiting range of weight. The 70g/m² used in producing the examples is referred to as White glassfibre tissue GFT-25K13-70 and does not provide an adequate covering power (opacity) of the underlaying layer or substrate material. Therefore if better opacity is required it can be created by pigmentation of the silicate binder material. The pigmentation of the silicate binder also provides the means to achieve a desired colour.

It is also an option that if calcium carbonate powder is added to the silicate binder the photocatalyst powder is mixed with the calcium carbonate before being dispersed in the liquid silicate binder coating material. A small amount of dispersant may be used to improve the distribution of the photocatalyst in any coating mixture.

Preferably, a silicate or sol-silicate primer is applied to the glass fleece before and/or after the hot pressing according to step c). A silicate or sol-silicate primer can be applied to the laminate surface to improve adhesion of any further silicate binder coating. Silicate primers and sol-silicate primers are generally used as a preparatory coating on surfaces prior to the final top coat. Their main functions include preparing the substrate by improving adhesion for subsequent coating layers.

Sol-silicate primers are a subtype that combine potassium silicate with colloidal silica (silica sol), which increases their versatility and compatibility with a wider range of substrates.

In cases, where a thin layer of thermosetting resin forms part of the outer surface, which may be indicated by contrasting areas on the glass fleece, the application of one or more layers of silicate or sol-silicate primer followed by one or more layers of silicate binder may alleviate the problem.

When there is a thin layer of thermosetting resin covering part or all of the glass fleece and sanding would blur an underlying decorative motif or destroy the initial surface topography, applying a silicate or sol-silicate primer followed by one or more clear or translucent silicate binder coatings can provide a method for achieving a functional fingerprint and mould resistant vapour permeable surface. It has been observed in the method according to the invention that a panel which presents with both a thin layer of thermosetting resin and areas of exposed glass fleece will accept a generous application of a silicate or sol-silicate primer and allow further coatings of silicate binder. Due to the silicate or sol-silicate primer not being readily compatible with a thermoset resin surface it may be necessary when there is thermoset resin on the surface to have a second coating of the primer between drying steps to ensure that the silicate binder coating is able to adequately adhere to the glass fleece laminate surface.

The resin of the one or more resin-containing substrates can contain colour pigments and/or fire retarding additives.

The one or more resin-containing substrates can be without pigmentation, or can be of one colour or can be of several colours, preferably including single substrates with multiple colours.

The step of hot pressing according to step c) preferably comprises applying a structure, preferably with a structure depth in the range from 1 µm to 500 µm. Preferably, a structure fineness in the range of 1 to 40 µm is achieved in order to obtain a matt surface.

During the resin flow, a first laminate topography can be produced on the glass fleece in the impregnated paper layers in a hot press with a pressing tool. The laminate topography can be a super-matt surface with an average texture depth of 1 µm to 4 µm or a relatively smooth matt surface with an average texture depth of 30 µm to 40 µm, or a deep texture, e.g. an average texture of 180 µm to 240 µm. Some structures etched onto the press tool can exceed a depth of 250 µm.

After creating the initial topography in the hot pressing step the surface of the laminate may be sanded and polished to create a smooth finish, or may be a matte finish, or may make use of both smooth & matte finishes. The surface of the laminate may be a structured finish. The initial structured finish is achieved using a structured press tool in a press when pressing the components that form the laminate, while further enhancements can be made once the laminate is out of the press. In addition the structure in the surface of the laminate may be further manipulated by etching the surface in combination with photoresists, or printing a structure directly to the surface with or without the use of a photoresist.

By printing or manually processing the coating on the laminate surface, optical defects can be corrected and/or the surface topography and/or the tactile effect can be improved. Preferably, printing to create a decorative motif and printing to change the original surface topography are coordinated, which is referred to as registered embossing. Preferably, the printing is done by inkjet, with Durst RockJET^{™} and Durst VariStructure^{™} being exemplary inkjet printing devices.

The thickness of the inventive laminate may vary, for example in the form of HPL/CPL <2mm, or compact laminate >2mm, for example 3mm, or 6mm or 13mm or thicker. The laminate thickness achieved by hot pressing thermosetting resin-containing substrates and glass fleece to one or both sides of a further substrate, for example to a wood based panel (particleboard, fibreboard, oriented strand board, plywood, CLT or combinations of these wood based materials), is primarily determined by the thickness of the further substrate.

Preferably, the method according to the invention is used to produce compact laminates with a thickness of more than 2 mm, preferably more than 10 mm. The aim may be to simulate natural stone or real wood decors as closely as possible by using different colors and layer thicknesses in the structure of a laminate, even different colors in one layer. Some rock materials, such as sedimentary rock formations, often have unevenness created by the build-up of layers over the years, and wood decors that give the illusion of growth rings reinforce the impression that the compact laminate is an original material, both in the side view and in the surface view. The number of layers in a compact laminate depends on the weight of the paper and the degree of impregnation. However, a suitable guide value is 0.2 mm per layer, which corresponds to approximately 15 layers for a 3 mm thick compact laminate or 65 layers for a 13 mm thick compact laminate. This large number of layers provides ample opportunity to mix the color and thickness of the resin-impregnated paper layers.

In some cases, uniform, single-color decorative paper is not used to make a single-color core compact laminate, but the decorative paper is made with a random color structure, so that when the compact laminate is cut, a non-uniform color is realized in the cross section, which improves the aesthetics of an original stone piece with a variety of layer defects.

A compact laminate can be cut into strips and used as edge material for wood-based panels that use the laminate according to the invention as a decorative surface material.

Preferably, the method according to the invention is used to produce LPM laminates with deep textures of 80 µm and more without the need for sophisticated press equipment. Deep textures in the production of short cycle laminates (LPM) of about 80 um and above require considerable pressure, for example short cycle presses of LPM boards with more than 300N/cm², preferably more than 400N/cm² and strict attention to the content of volatiles and the type of latent hardener used in the MF impregnated paper. Today there are modern short-cycle presses, e.g. the Siempelkamp KT700 short-cycle press, which is equipped with 40 cylinders instead of the usual 12 or 14 cylinders to ensure an even pressure distribution and a pressureless exposure of only 0.8 seconds to avoid curing of the resin. When using a glass fleece, which unlike normal MF impregnated decor or overlay paper is not saturated with MF resin, there is no need to aim for a minimum pressureless time, and the press pressure is sufficient at around 300N/cm² so that older presses can also be used. Of course, there will be occasions when a modern, sophisticated short-cycle press such as the Siempelkamp KT700 will be useful, for example when using high-density fiberboard or when producing a laminate in a short-cycle press with deep structures that may exceed 200 µm.

Creating a laminate surface compatible with a simple process to change the surface decoration, for example painting with a silicate binder of a different colour, enables the consumer to follow colour trends without the cost associated with replacing the laminate. An economic evaluation of products includes for example life cycle analysis, and being able to refinish or refurbish a laminate is an environmentally responsible attribute. The ability to recoat the laminate surface allows for repairs to be made, new colours or design motifs to be used, and in a society demanding better environmental sustainability and inclusion in a circular economy, the economic and sustainability attributes help create demand. Refurbishing or recoating in-situ is a strong economic and environmental advantage of the laminate and a driver for consumer choice.

When refurbishing a damaged laminate, it may be advantageous for economic and production reasons that instead of sanding down the surface to remove a defect, a new glass fleece is bonded to the existing silicate binder surface and the new glass fleece surface is coated with silicate binder. Sanding down the old surface and applying a new glass fleece is not excluded.

Unless there is catastrophic damage to the surface of the laminate or substrate, the laminate can be re-worked during the manufacturing process, as well as after it has been used for any industrial, commercial or individual consumer application. In a world market demanding emphasis on circularity (repair, reuse, recycle) during the product lifecycle, the ability to be able to continually re-work the non-film forming silicate binder surface of the laminate by simple means such as repainting, or sanding and repainting or printing anew, enhances the economic and environmental qualities of the laminate. In the re-working of the laminate it is understood that the coating can again be silicate binder with or without a photocatalyst, however in the re-coating other types of coatings are not excluded. Even when the original laminate surface contains a photocatalyst in the outer layer and in a later re-coating an organic material based gloss finish is desired, the surface can be sanded to remove the upper section of the outer layer and a new silicate binder coating applied without a photocatalyst, and subsequently to achieve a gloss finish a clear gloss layer can be applied.

The ability to re-work or re-furbish the inventive laminate surface provides the opportunity to recover what in a traditional laminate would be sold as "down-graded" material or rejected as scrap, and allows various cost effective commercial opportunities not available with traditional thermosetting laminates. For example, the inventive laminates could be rented for seasonal promotions, and then be returned and a credit given towards a new purchase. In either of these examples the laminates being replaced or returned are evaluated for refurbishing and being re-used.

Preferably, a printed design is matched to the surface topography after pressing by using the existing stone/tile printing technology to print part or all of the surface with a texture that matches the printed design.

Preferably, the silicate binder surface is printed, and/or has an abstract design created by means other than printing, and/or the surface topography is enhanced by means of inkjet printing, and/or the surface topography is altered by physical means of sanding, etching, or polishing.

According to the invention, a clear or translucent silicate binder can be applied to the surface after printing. Preferably, the clear silicate binder contains abrasion resistant particles. The silicate binder can protect the print from damage. To avoid any printing ink blocking access to a photocatalyst it is preferred that a final clear translucent potassium silicate binder is applied after the printing step, wherein the silicate binder contains the photocatalyst.

The silicate binder can be modified to include a degree of flexibility by the addition of 1-5 weight-% glycerine and/or another polyhydric alcohol. This is especially relevant when a deep initial surface topography, for example >200 µm, is being created during the hot pressing and flow of the thermosetting resin.

Before end-user installation of the inventive laminate a material or coating may be applied to the reverse side of the laminate to provide a functional aspect such as improved acoustic performance, improved insulation performance, a moisture barrier, an airtight barrier, electromagnetic radiation reflection, a fire retarding barrier or any combination of these functional objectives. An example of material used as the reverse layer to provide insulation is an expanded polystyrene (EPS) material. Preferably the EPS is fire retardant.

The laminate may be used as a standalone building or decorative component, or attached to existing infrastructure such as a wall, door, ceiling or floor. In some aspects HPL/CPL or compact laminates may be attached to a wood based panel such as plywood, particleboard, fibreboard (LDF, MDF, HDF), oriented strand board (OSB) including multiple OSB panels forming a massive block, cross laminated timber (CLT) or other wood based panels. Preferably the wood based panels are made with low formaldehyde emission classification such as E1, E0, E0.5, CARB Phase 2, JIS F**** or with no-added formaldehyde resins, for example pMDI.

Laminates according to the invention may be used in outdoor applications where the inorganic surface materials are less susceptible to UV degradation.

Currently there is concern about the future use of melamine due to the fact that melamine in Dec 2023 was identified as a Substance of Very High Concern (SVHC) for inclusion in the REACH Candidate List due to scientific evidence of probable serious effects to human health and the environment which give rise to an equivalent level of concern to PMT (persistent, mobile, toxic). Therefore the choice of thermosetting resin for the bonding layer below the nonwoven glass fleece is not limited to formaldehyde based resins such as melamine formaldehyde, it also includes non-formaldehyde based thermosetting resins, including for example polyester, vinyl ester and epoxy resins.

The panel with the inventive coating may feature a commercial advertisement, or an industrial design or be a unique art piece of considerable value. The inventive laminate can be used for interior or exterior applications, such as in a room or a large interior open space including as wall panels, ceiling panels, door panels, room divider panels, flooring, pieces of furniture, a benchtop or on functional equipment such as a radiator panel. The inventive laminate may be flat or a shaped 3D object.

The task of the invention is also to provide a laminate. To solve the problem, a laminate produced by the method according to the invention is provided.

The laminate comprises
A) a resin-containing substrate
B) a glass fleece on the resin-containing substrate
C) a silicate binder coating on the glass fleece
D) optionally a photocatalyst in the silicate binder coating and/or other inorganic additives
E) optionally one or more further substrates, preferably selected from wood based, plastic, or metallic substrates
F) optionally a functional material on the bottom side of the laminate.

The description of the laminate according to the invention and the method according to the invention for manufacturing a laminate are to be understood as complementary to each other, so that method details that are explained in connection with the laminate are also to be understood individually or in combination as method details. Features of the laminate that are explained in connection with the method according to the invention are also to be understood individually or in combination with each other as features of the laminate.

The laminate with its various aspects may constructed in many forms. In a first (1) example layers of thermosetting resin impregnated paper and the nonwoven glass fleece are fused together in a hot press, or (2) thermosetting resin impregnated paper and the nonwoven glass fleece laminated to a non resin-containing substrate in a hot press, or (3) having a thermosetting resin applied directly to a non-resin-containing substrate and partially cured and the nonwoven glass fleece fused to the substrate in a hot press to form the laminate, or (4) a nonwoven glass fleece together with a thermosetting resin impregnated paper is combined in a hot press with a substrate that has a thermosetting resin applied to the surface of the substrate. Variations to these examples are not excluded and may include the use of a non-impregnated décor paper or a partially impregnated specialised paper such as a fire retardant paper positioned between an impregnated core paper and an impregnated overlay paper and the glass fleece

As a fifth example of a 3 mm compact laminate according to the invention, a 70g/m² nonwoven glass fleece is combined with 15 layers of impregnated kraft paper and pressed at about 500 N/cm² specific pressure at 165 °C in a hot press for 3 minutes until the laminate is substantially fully cured. Subsequently, a silicate primer (Porters Mineral Silicate Primer) was applied to the laminate surface and allowed to dry, followed by coating with a potassium silicate paint (Murobond, Mineral Silicate Matte Clear) containing a photocatalyst (Kronos KRONOClean 7000).

In a sixth example of a LPM laminate according to the invention, a 70g/m² nonwoven glass fleece is combined with an impregnated underlay paper (30g/m² clear overlay paper impregnated with a MF thermosetting resin) and a sheet of 8mm MDF and pressed at about 400N/cm² specific pressure in a hot press for about 30 seconds. Subsequently, a silicate primer (Porters Mineral Silicate Primer) was applied to the laminate surface, and after allowing the primer to dry a potassium silicate paint (Murobond, Mineral Silicate Matte Clear) containing a photocatalyst (Kronos KRONOClean 7000) is applied to the laminate surface.

As a seventh example the laminate having been attached to a wall is subsequently refurbished in-situ by means of a light sanding of the surface and a new layer of potassium silicate paint applied.

The invention is explained again below by way of example with reference to the figures.

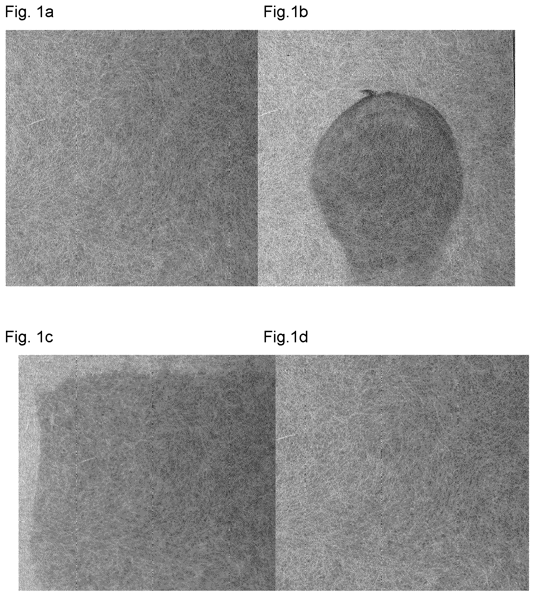

Fig.1a shows a laminate according to the invention (according to example 5) comprising a potassium silicate surface before applying black boot polish
Fig.1b shows the laminate according to Fig. 1a after applying black boot polish
Fig.1c shows the laminate according Fig 1b after cleaning with mineral turps (wet)
Fig.1d shows the laminate according to Fig. 1c after drying

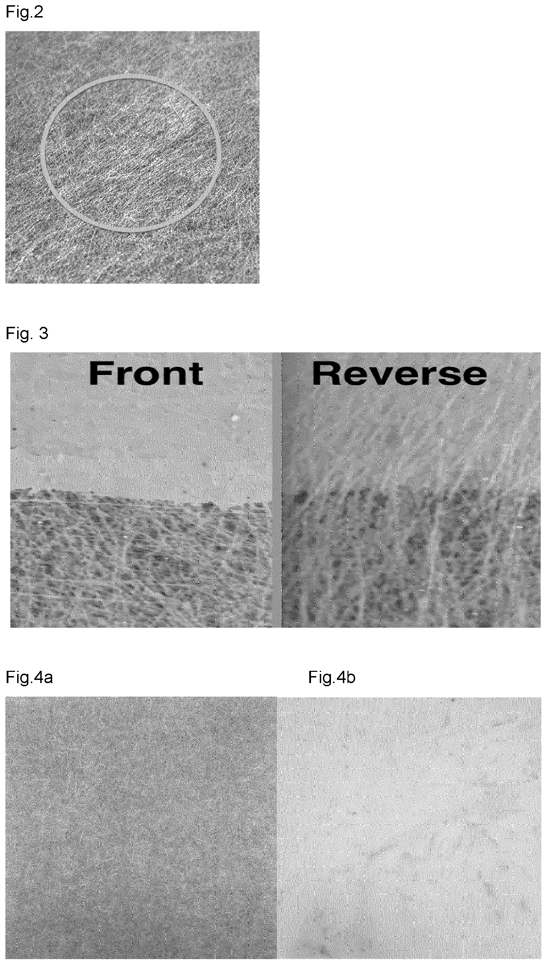

Fig. 2 shows a laminate according to the invention (according to which example 6). There is only a thin layer of thermosetting resin on part on the surface of the potassium silicate, which forms part of the outer surface, as shown in the circled area. The application of one or more coatings of silicate or sol-silicate primer and subsequently one or more silicate binder layers can alleviate the problem.
Fig. 3 shows a potassium silicate with a calcium carbonate filler applied on the front side (left) of a 70g/m2 nonwoven glass fleece and not substantially progressing through to the reverse side thereby leaving the reverse side (right) of the nonwoven glass fleece open to allow ingress of for example an amino or phenolic formaldehyde resin and securely bind 2 layers creating the outer layer of a laminate according to the invention.
Fig. 4a shows a laminate according to the invention using a black resin-containing paper in combination with a white glass fleece and a clear or translucent potassium silicate coating allowing the glass fleece to be visible as a contrast.
Fig. 4b shows a laminate according to the invention using décor resin-containing paper in combination with a white glass fleece and a clear or translucent potassium silicate coating allowing the print design of the décor paper to be visible.

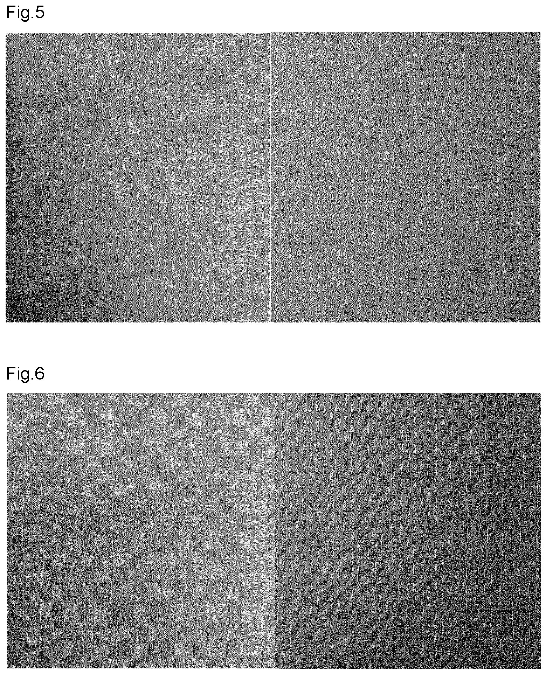

Fig. 5 shows a laminate surface according to the invention with a texture depth of approx. 38 µm (left side) in comparison to an original HPL laminate with the same texture without glass fleece (right side).
Fig. 6 shows a laminate surface according to the invention with a texture depth of approx. 220 µm (left side) in comparison with an original HPL laminate with the same texture without glass fleece (right side).

## Claims

1. Method of manufacturing a laminate comprising the steps of
a) providing one or more resin-containing substrates
b) providing a glass fleece
c) hot pressing of the one or more resin-containing substrates with the glass fleece
d) coating the glass fleece with one or more layers of a silicate binder.

2. Method according to claim 1, wherein the one or more resin-containing substrates are one or more resin-impregnated papers and/or one or more partially cured resin coated substrates, preferably wherein the one or more resin-containing substrates comprise one or more non resin-containing substrates as a bottom layer.

3. Method according to claim 1 or 2, wherein the glass fleece is only coated on the upper side with a silicate binder, preferably wherein the bottom side of the glass fleece is coated with a resin.

4. Method according to any one of claims 1 to 3, wherein the coating of the upper side of the glass fleece with a silicate binder according to step d) is carried out before and/or after the step of hot pressing according to step c).

5. Method according to any one of claims 1 to 4, wherein the silicate binder comprises potassium silicate and/or sol-silicate, preferably wherein the silicate binder consists of potassium silicate and/or sol-silicate.

6. The method according to any one of claims 1 to 5, wherein the silicate binder comprises one or more inorganic additives, preferably selected from the group consisting of a photocatalyst, colour pigments, calcium carbonate, abrasion resistant hard particles, antiviral additives, antibacterial additives and antimicrobial additives.

7. Method according to claim 6, wherein the photocatalyst is not introduced in a first layer of the silicate binder on the glass fleece.

8. Method according to any one of claims 1 to 7, wherein a silicate or sol-silicate primer is applied to the glass fleece before and/or after the hot pressing according to step c).

9. Method according to any one of claims 1 to 8, wherein the resin of the one or more resin-containing substrates contains colour pigments and/or fire retarding additives, and/or wherein the resin of the one or more resin-containing substrates is a thermosetting resin curable by heat in a hot press.

10. Method according to any one of claims 1 to 9, wherein the one or more resin-containing substrates are without pigmentation, or are of one colour or of several colours, preferably including single substrates with multiple colours.

11. Method according to any one of claims 1 to 10, wherein the step of hot pressing according to step c) comprises applying a structure, preferably a structure with a structure depth in the range from 1 µm to 500 µm.

12. Method according to any one of claims 1 to 11, wherein the silicate binder surface is printed, and/or has an abstract design created by means other than printing, and/or the surface topography is enhanced by means of inkjet printing, and/or the surface topography is altered by physical means of sanding, etching, or polishing.

13. Method according to claim 12, wherein a clear or translucent silicate binder is applied to the surface after printing.

14. Laminate produced by the method according to any one of claims 1 to 13.

15. Laminate comprising
A) a resin-containing substrate
B) a glass fleece on the resin-containing substrate
C) a silicate binder coating on the glass fleece
D) optionally a photocatalyst in the silicate binder coating and/or other inorganic additives
E) optionally one or more further substrates, preferably selected from wood based, plastic, or metallic substrates
F) optionally a functional material on the bottom side of the laminate.
